# EUROPEAN PATENT SPECIFICATION

(11) **EP 1 787 142 B1**
(45) Date of publication and mention of the grant of the patent: **19.11.2008**
(21) Application number: 05777524.9
(22) Date of filing: 07.09.2005
(51) Int. Cl.: G01S 17/93, G01S 17/89, G01S 3/783, B64D 47/02, G08G 5/06

(54) **A COLLISION AVOIDANCE WARNING AND TAXIING GUIDANCE DEVICE**
KOLLISIONSVERMEIDUNGS-WARN- UND TAXI-LENKEINRICHTUNG
AVERTISSEUR D'ANTICOLLISION ET DISPOSITIF DE GUIDAGE POUR LA CIRCULATION SUR TAXIWAYS

(30) Priority: 07.09.2004 IE 20040592
(43) Date of publication of application: 23.05.2007
(73) Proprietor: Butler, William Michael, County Dublin (IE); Brennan, Norah, County Dublin (IE)
(72) Inventor: Butler, William Michael, County Dublin (IE); Brennan, Norah, County Dublin (IE)
(74) Representative: O'Connor, Michael Donal
(86) International application number: PCT/IE2005/000091
(87) International publication number: WO 2006/027762

(56) References cited:
- EP-A- 1 345 044
- US-B1- 6 211 808
- US-B1- 6 563 432

## Description

### Introduction

The present invention relates to a collision avoidance warning and taxi guidance device for an aircraft having an anti-collision warning light. One of the causes of damage to aircraft on the ground is collision with other aircraft, vehicles, equipment on the ground or indeed, fixed installations. These happen while manoeuvring on the apron and taxiways of airports.

When aircraft are stationary, such as at a passenger gate or in a maintenance area, usually with the engine switched off, strategically placed traffic cones, guard rails or indeed other warning devices are provided around the aircraft. However, such devices are not relevant or indeed available once an aircraft begins to move, either during a pushback from a gate or stand, a towing manoeuvre, or indeed when taxiing under its own power around the airport.

Once the aircraft is in motion, the responsibility for the manoeuvring operation falls to personnel in charge of this manoeuvring operation, usually the pilot. The problem is that during these manoeuvres, in the absence of ramp personnel directed to "wing walk" the aeroplane, the various personnel involved must use their judgement regarding the possibility of collision between the aircraft and some stationary or moving object. The exercise of this judgement can be difficult due to the dimensions of the aircraft and indeed general lack of visibility. This obviously is exacerbated during night time.

The problem for the pilot is that as aircraft sizes increase, the distance between the cockpit and the aircraft wing tip increases and there is considerable difficulty for the pilot to judge, for example, wingtip clearance from other aircraft or fixed objects. This problem is further compounded by the ever increasing congestion at airports due to the exponential increase in aircraft traffic. Indeed, current forecasts are for air traffic worldwide to double by the year 2020. Due to general environmental concerns and, in particular, opposition by the general populous, it is not unreasonable to predict that there will not be sufficient airports available or at least there will not be sufficient new airports available to absorb this additional traffic. A considerable proportion of new traffic will be directed to existing airports, further increasing the congestion within these airports.

A further feature of large aircraft is the difficulty of taxiing such aircraft safely on narrow and badly lit taxi-ways particularly during turning manoeuvres. For example, in US Patent Specification No. 6,804,607, there is described a collision avoidance system for aircraft which is generally related to unmanned aircraft. A light detector camera or other sensor receives a signal return if an object enters some predetermined safety cocoon so that corrective action may be taken when some other object enters into that cocoon. This, however, deals with aircraft in flight.

For example, US Patent No. 6,211,808 (Flight safety Tech. Inc.) describes a collision avoidance system mounted on an aircraft for providing to the pilot of that aircraft an early warning of the presence of another nearby threat aircraft within the surrounding airspace. The system operates autonomously from that aircraft and does not require the presence of any match system onboard the threat aircraft. The system includes an omni-direction L-band microwave antenna formed by a dielectric sphere cut into eight equal "orange wedges" covering eight distinct beam patterns. L-band microwave signals are transmitted simultaneously from all eight dielectric sectors to provide a sphere of detection around the aircraft. The sectors also act as receivers for detecting microwave signals reflected back from the threat aircraft and indicating means provides information to the pilot regarding the direction, closeness and rate of closure of the threat aircraft.

The actual number and instances of crashes on the ground have to date been relatively rare, however, it is predictable that such accidents are almost certainly going to increase as a result of increases in air traffic and high flight turnaround expectations, with resultant considerable costs and possibility of injuries to personnel.

Patents have been filed based on radar installations placed on the wingtips of aircraft, but these have not been installed to date. This may be due to the complexity and cost of such installation. Tracking of other objects using GPS data (and beacons placed on moving vehicles) have also been patented, but such an invention does not provide clearance information for aircraft which are purposely manoeuvring in close proximity to other aircraft or ground objects.

While it is accepted that it would be advantageous to provide some way of warning to pilots and other personnel, and in particular pilots in the cockpit of an aircraft of an impending or potential for collision, any such equipment must not add to the complexity of the aircraft itself and must never, due to its malfunctioning, lead to aircraft unavailability.

Any system should almost certainly not require any modification to the operating system of the aircraft itself. Any such system must be easily installed, checked and maintained and must result, as stated already, in the minimum disruption of the aircraft systems and structures.

EP 1 345 044 A (Cambridge Consultants Limited) discloses an anti collision warning system for aircraft which uses an array consisting of transmitter and receiving elements. The receiving elements are spaced apart and measure the amplitude as well as the azumith and elevation of obstacles.

US 6,563,432 B1 (Millgaard Lars) discloses a system for checking the apron and detecting fog or snow on the apron. A scanning laser radar system is used which is attached to the aircraft.

In summary, many of these known systems are technically efficient and on the face of it appear to be easily applied to the avoidance of on the ground collisions. There are essentially two problems. When in flight, aircraft are very tightly controlled by air traffic controllers and on-board collision detection equipment such as has been discussed heretofore. However, on the ground, the aircraft is subject to totally different conditions and generally to a lack of control and unfortunately when on the ground, is subject to the actions of other parties, many of whom are not highly skilled. There is essentially a transfer from tight regulation and control in the air to what could almost be described as haphazard control on the ground. A further problem is that the conditions vary so much on the ground. In some instances, an aircraft is relatively stationery or moving at a very low speed relative to other objects, while in other circumstances, it is moving relatively fast in the presence of other moving vehicles and aircraft.

The invention is directed towards overcoming the problems of such collisions and further, the invention is directed towards providing a system for collision avoidance. Any such system must be, as it were, standalone and must be such that, in the event of failure, it does not in any way impinge on the operating efficiency of the aircraft itself. It must also be user friendly and not a distraction for a pilot.

The present invention is directed towards overcoming these and other problems.

### Statements of Invention

According to the invention as defined by the claims, there is provided an aircraft on the ground collision avoidance warning system for an aircraft having at least one anti-collision light source emitting a pulsed light, the system comprising:
a light source for delivering light onto an external object and sensors for measuring the intensity of the back scattered light from the object,
characterised in that the light source comprises the or one of the aircraft anti-collision light sources;
and further **characterised in that** sensors consist of at least a pair of sensors which are mounted on the aircraft spaced-apart from the light source and forward of a beam transmitted from the light source to record the intensity, azimuth and elevation of the back scattered light; and
processing means to determine therefrom the dimensions and location relative to the aircraft of an object impinged on by the light source and to determine, having regard to the position and movement of the aircraft, whether a collision alert is to be given.

The great advantage of this is that only those warnings will be given that require action from personnel moving an aircraft on the ground. For example, when taxiing, a pilot will not be given what are effectively spurious warnings of the presence of other aircraft which he or she can clearly see. Similarly, when stand manoeuvring, only relevant warnings will be given.

In one embodiment of the invention, the processing means measures the speed at which the aircraft and object are approaching each other. This is very important because again, the purpose of the invention is to ensure that the warnings are given having regard to the movement and position of the aircraft relative to other aircraft, buildings, stationary objects or indeed moving aircraft and vehicles.

In one embodiment of the invention, the sensors are placed on one or more of: the aircraft fairings; the nose cone; and the landing gear, skids for a helicopter or other locations.

In another embodiment, each sensor has a preset zone within which backscattered light is received and the sensors are so arranged that at least two zones overlap.

Again, in one system according to the invention, the processing means communicates by a wireless communications system. The processing means may comprise means to store and update relevant details of a predetermined space relative to a portion of the aircraft to define a protection zone for that portion of the aircraft. Accordingly, as the position of the aircraft changes, or objects positioned relative to the aircraft move, the details, and thus the protection zones may be dynamically changed as necessary.

In this latter embodiment, the protection zones may be divided into different sectors for which different collision warnings are given.

Again, in these latter embodiments, the protection zones may be determined having regard to one or more specified operations of the aircraft including:
location of the aircraft;
movement of the aircraft;
speed of movement of the aircraft;
possibility of the presence of other moving aircraft;
probable maximum speed of other moving aircraft;
possibility of the presence of other moving vehicles; and
probable maximum speed of other moving vehicles.

Indeed, some of the specified operations may comprise:
stand manoeuvring;
aircraft pushback;
taxi mode;
movement in the presence of other aircraft;
tow mode;
pavement departure;
movement in the presence of snow;
runway entry; and
runway departure.

Using the different reflecting properties of different surfaces such as grass, gravel, sand, paving, concrete and tarmacadam, the sensors can detect the boundaries of the taxi-way. An audio or visual warning would be given should the system detect a probability of a main or nose wheel departing the paved surface.

The processing means may comprise means, with the aircraft stationary, to carry out the steps of:
determining the dimensions and location relative to the aircraft of all objects likely to cause a collision on the aircraft moving towards them;
mapping and storing the location of the objects; and
determining, having regard to the objects and the likely future movement of the aircraft, the proximity to the object required to provide a subsequent collision alert.

The advantage of this is that the processing means can, in effect, learn enough to ensure that only those warnings are given that are appropriate and require action.

### Detailed Description of the Invention

The invention will be more clearly understood from the following description of some embodiments thereof, given by way of example only, with reference to the accompanying drawings, in which:
Fig. 1 is a front partially diagrammatic view of an aircraft incorporating the invention,
Fig. 2 is an underneath plan view of the aircraft,
Fig. 3 is a front view of the aircraft,
Fig. 4 is a diagrammatic view showing the operation of the invention,
Fig. 5 is a view of one display according to the invention,
Fig. 6 is a plan view showing the various warning zones incorporated in the invention for an aircraft taxiing,
Fig. 7 is a view similar to Fig. 6 showing an aircraft manoeuvring in company with other aircraft,
Fig. 8 is a plan view showing various stand manoeuvring alert zones for an aircraft,
Fig. 9 is a side view of the aircraft of Fig. 8,
Fig. 10 is a front view of the aircraft of Fig. 8,
Fig. 11 is a rear view of the aircraft of Fig. 8,
Fig. 12 is another plan view of the aircraft showing the alert zones of an aircraft on a stand,
Fig. 13 is a view showing pavement departure scanning,
Fig. 14 is a view similar to Fig. 13 showing pavement departure scanning in the presence of a snow bank,
Fig. 15 illustrates an aircraft attached to a tow truck,
Fig. 16 illustrates a control panel,
Fig. 17 illustrates, in plan, a different method of mounting sensors on an aircraft,
Fig. 18 is a front view of the aircraft of Fig. 17,
Fig. 19 is a rear view of the aircraft of Fig. 17,
Fig. 20 is a plan view showing the various alert zones for the helicopter;
Fig. 21 is a front view of a helicopter fitted with the invention,
Fig. 22 is a side view of the helicopter of Fig. 20,
Fig. 23 is a front view of another aircraft showing sensors in different positions,
Fig. 24 is a partial side view of the aircraft of Fig. 23,
Fig. 25 is a rear view of the aircraft,
Fig. 26 is a partial plan view of portion of the aircraft showing the identification of the presence of an object,
Fig. 27 is a graphical display of increase in intensity of the reflected light above ambient from an adjacent object,
Fig. 28 is a plan view showing stand manoeuvring zones for the aircraft of Fig. 23,
Fig. 29 is an elevational view of the stand manoeuvring zones,
Fig. 30 is a diagrammatic view showing one placement of sensors,
Fig. 31 is a diagrammatic view showing another way in which sensors can be placed on an aircraft, and
Fig. 32 is a cockpit display for stand manoeuvring alert warning zones.

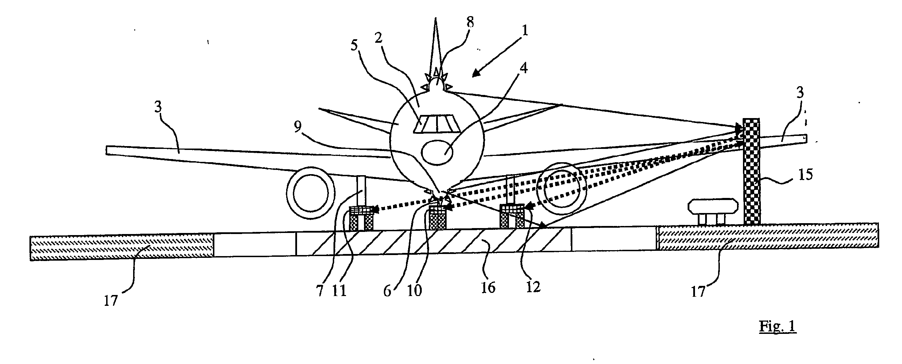

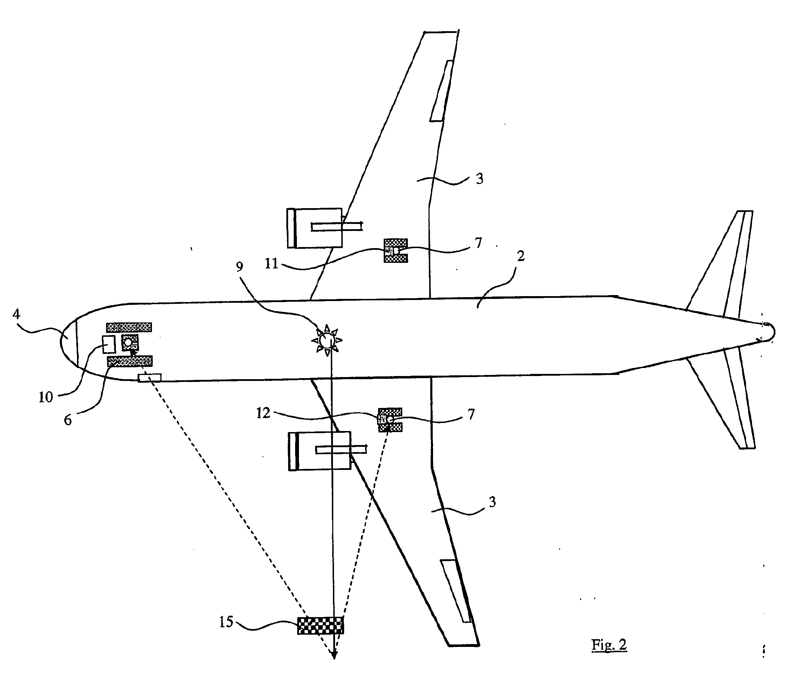

Referring to the drawings and initially to Figs. 1 to 4 thereof, there is illustrated an aeroplane or aircraft, indicated generally by the reference numeral 1, having a body 2, wings 3, a nose cone 4, a cockpit 5, nose landing gear 6 and main landing gear 7. There is also an upper anti-collision warning light 8 and a lower anti-collision warning light 9. There are provided three sensors, namely a sensor 10 on the nose landing gear 4 and sensors 11 and 12 on the main landing gear 7. Each of the sensors 10, 11 and 12 are optical sensors and the optical sensors 11 and 12 have associated IR transmitters incorporated therewith, which in turn transmit to an IR receiver associated with the sensor 10. In practice, there would probably be sensors on the nose cone 4. They are, for ease of understanding, not shown.

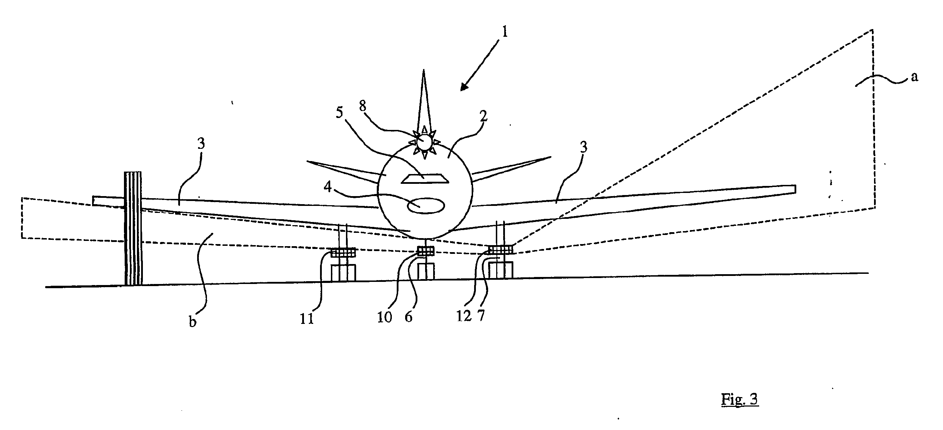

An object 15 is illustrated, lying outside a runway 16 on a grass verge 17, which would form an obstruction to the forward travel of the aircraft 1. Fig. 1 shows, by full lines, light directed from the anti-collision warning lights 8 and 9 onto the object 15 and both directly from the runway 16. The light is reflected from the runway 16 onto the object 15. The light will be delivered directly onto the object 15 and also by reflection from the runway 16 and verge 17. The sensors 10, 11 and 12 then receive back scattered light, illustrated by interrupted lines, from the object 15. The back scattered light is delivered in what is, in effect, a cone in the sense that the light is reflected in the x, y and z planes. Fig. 3 shows the back scattered light in two z planes being received by the sensor 12.

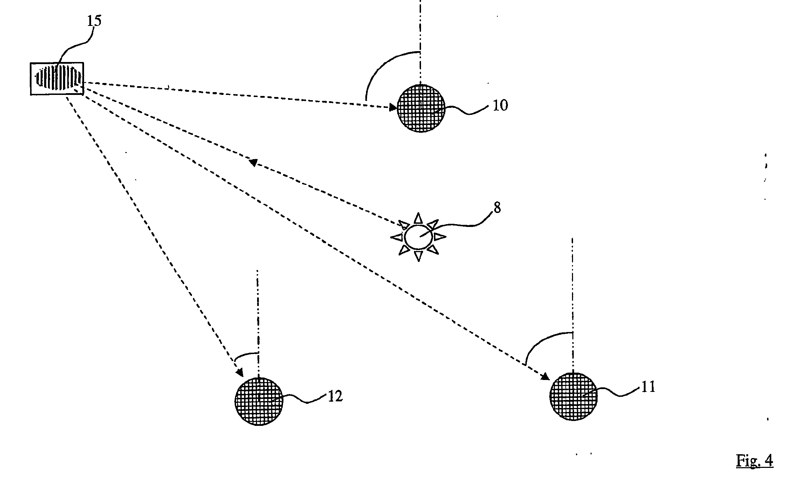

Fig. 4 illustrates how the back scattered light is collected by the sensors 10, 11 and 12 which is then transmitted to the processing equipment which will allow the height and position of the object 15 to be identified.

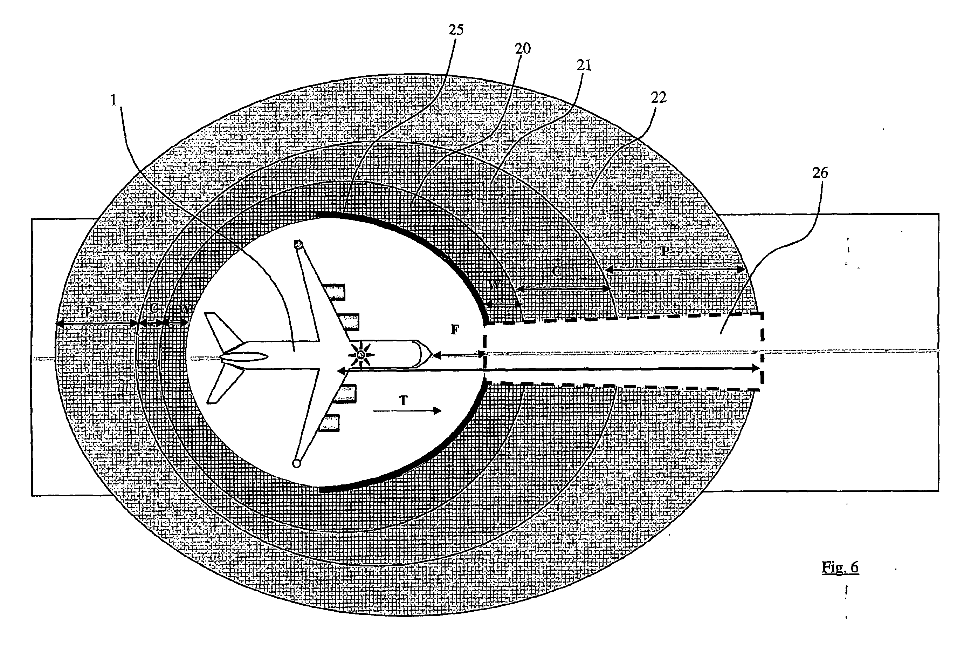

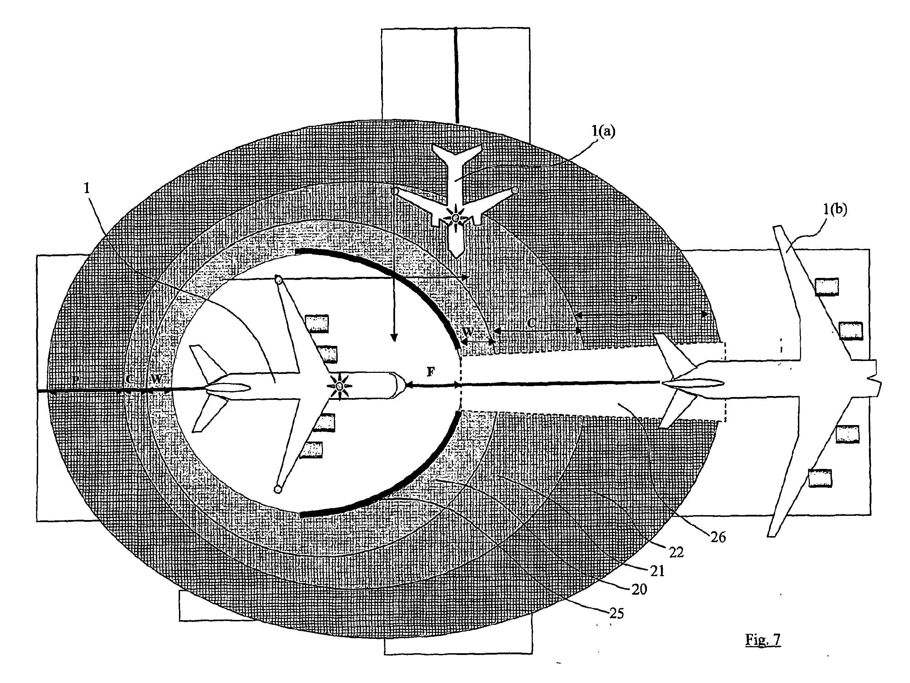

Referring now to Figs. 6 and 7, there is illustrated three protection zones for an aircraft which is taxiing, namely, moving forward at a speed in the direction of the arrow T. There are illustrated three protection zones 20, 21 and 22, together with a hard warning boundary 25. If an object penetrates the hard warning boundary, the aircraft will not be able to move clear of the obstacle by forward taxiing using onboard nose wheel steering. The protection zone 20 will generally be the area in which a level two alert will be used to cause the aircraft to stop at a cabin crew safe rate. This, therefore, would depend on the aircraft speed. Then, in zone 21, there would be a level one alert, for example, braking at normal taxi rate, while the zone 22 would be a protection zone and not necessarily leading to any alert. There is also shown a forward sector or zone 26 where there will be no warnings issued because firstly it is in the pilot's direct line of sight and secondly in taxiing mode, there will usually be other aircraft present and a warning would be inappropriate. It is normal for the nose of aircraft, it will be appreciated, to approach the rear fuselage of an aircraft ahead on the taxiway and thus it is necessary to prevent nuisance alerts.

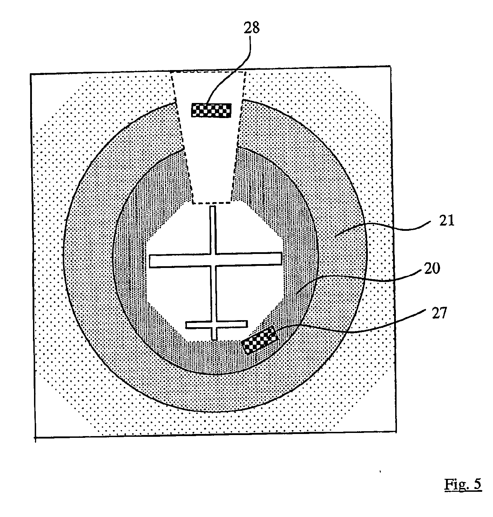

It will be appreciated that various ways of carrying out the alert for the pilot may be provided, such as, for example, by way of a display, as illustrated in Fig. 5 where there is shown an object 27 which would cause a warning alert, while there is also shown an object 28 which would not cause a warning alert: it would probably be another aircraft. It will be noted from this display that only the warning zones 20 and 21 are illustrated on the display.

Fig. 7 illustrates the aircraft 1 taxiing again in the presence of aircrafts 1(a) and 1(b). It will be noted that various dimensions in relation to the warning zones are illustrated by the letters F, W, C and P. The dimensions W, C and P will vary with aircraft ground speed and the dimension F will be dependent on the aircraft geometry and turning circle. The aircraft 1(b) will not generate any warning alert onboard an aircraft 1. In general, there will not necessarily be an alert when such an aircraft is taxiing close to the aircraft 1. The aircraft 1(b) may generate an onboard alert if it's own protection zone is penetrated by the aircraft 1 as aircraft 1(b) will also have it's own controls. Similarly, if aircraft 1(a) is stationery and aircraft 1 is in motion, the relative track of aircraft 1(a) will not generate an alert in aircraft 1. If the contrary is the case, in other words, if aircraft 1 is stationery and aircraft 1(a) is in motion, the relative track of aircraft 1 will generate a cautionary warning alert in aircraft 1(a) and possibly also in aircraft 1. How the warning is generated will be optional, however, it is very important that spurious warnings are not issued. The pilot of the aircraft, whether it be 1, 1(a) or 1(b) does not want warnings which do not require actions.

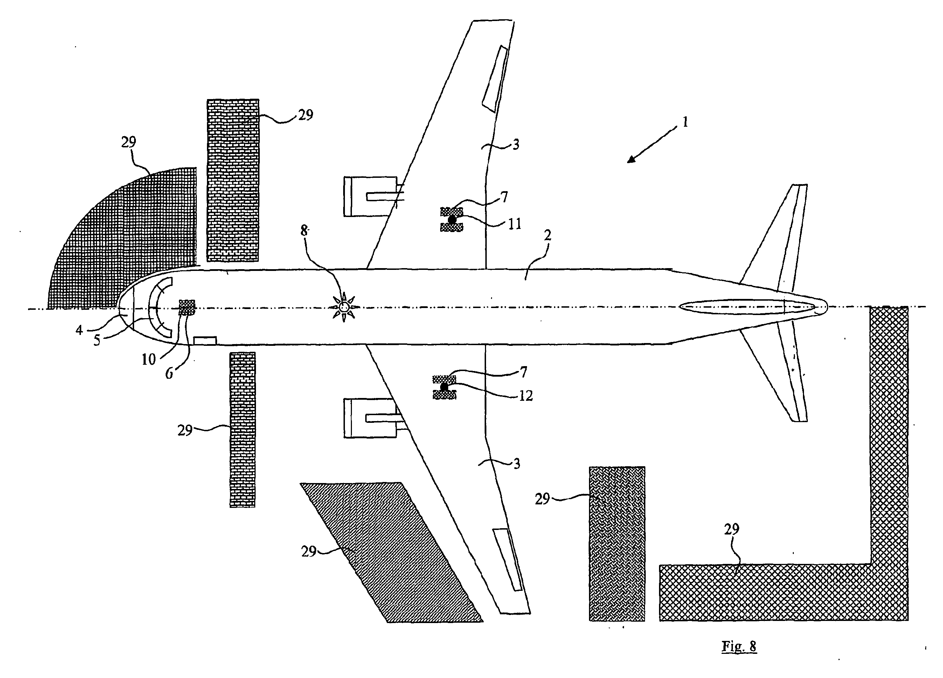

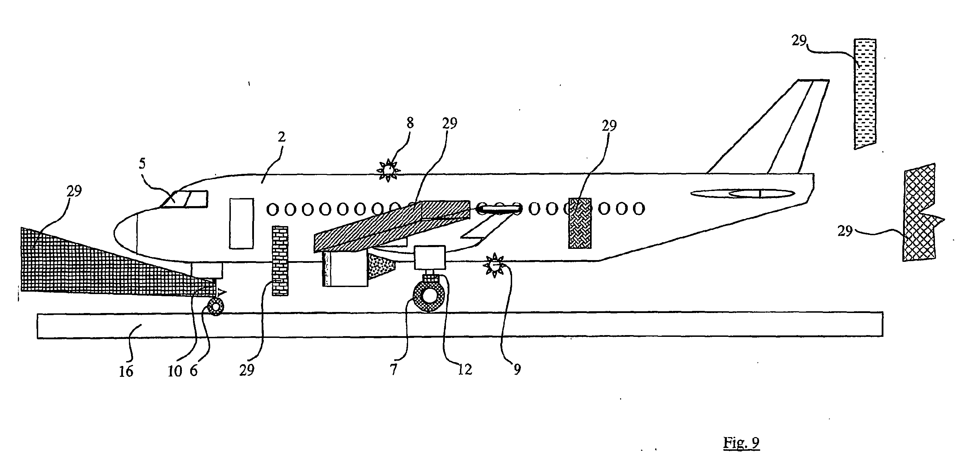

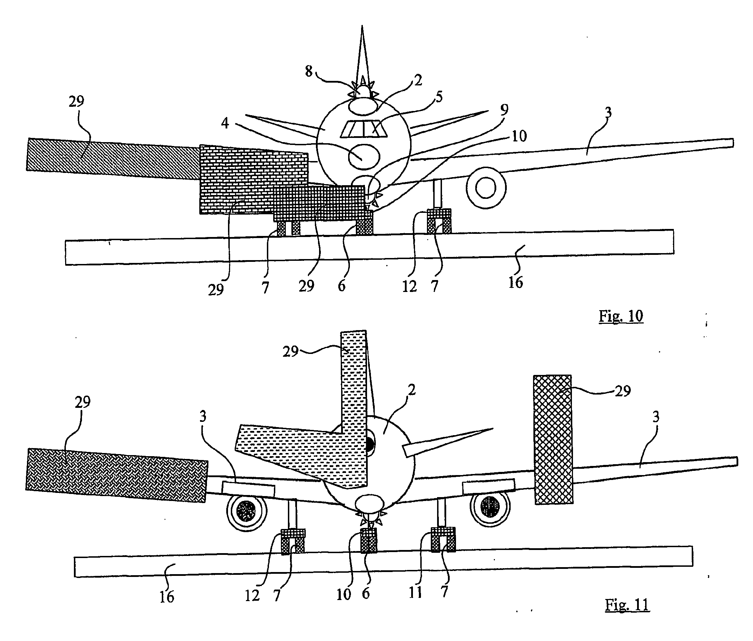

Figs. 8 to 11 show, firstly in plan and then vertically, various alert zones 29 required for an aircraft in stand manoeuvring mode. The vertical dimensions of leading and trailing edge zones will be dependent on the wing positions which will vary, whether the tanks are full or empty. Similarly, for example, the height and forward extent of the zone must be sufficient to detect personnel or push or lift tractors not visible from a cockpit. However, again, other zones do not have to be shown. It will be appreciated that the zones might vary.

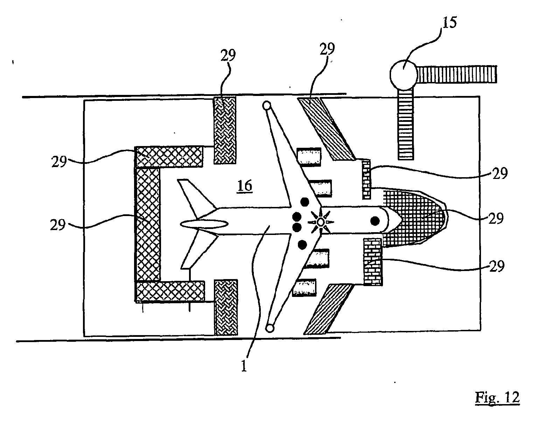

Fig. 12, for example, shows stand manoeuvring alert zones under pushback situations.

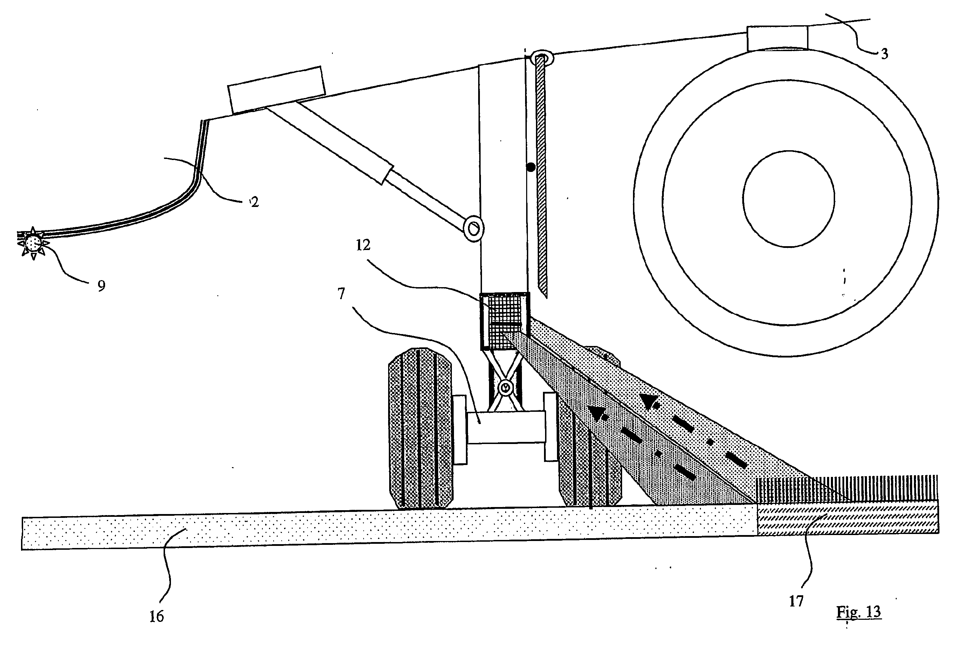

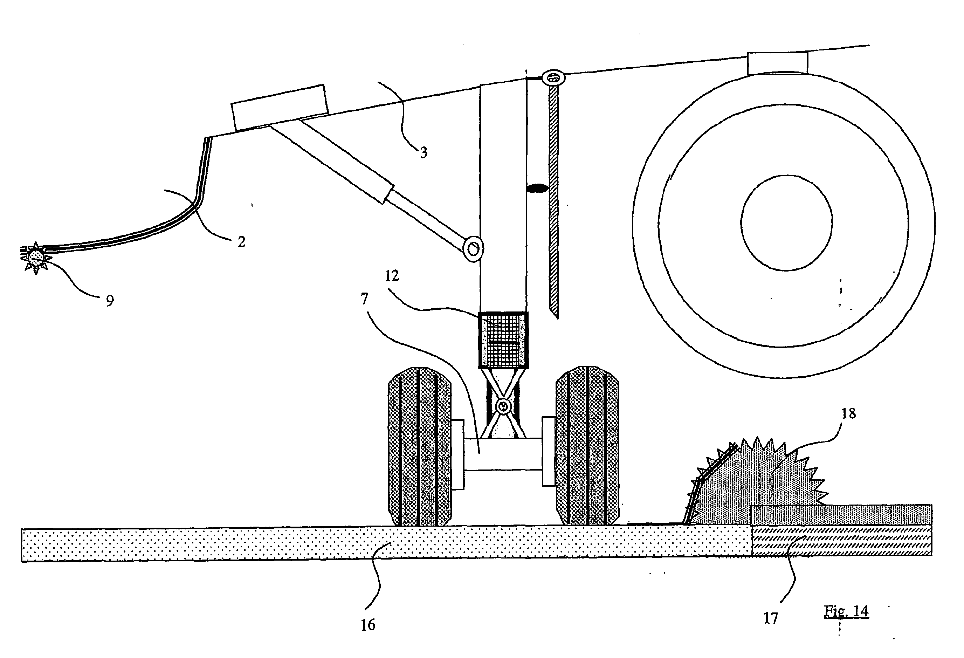

Figs. 13 and 14 show pavement departure scanning which is self-explanatory with the same reference numerals used to identify parts similar to those previously described.

Fig. 14 illustrates scanning for a snow bank 18 on the edge of a runway 16. This is particularly important where aircraft are turning onto a runway, when the outer tyre gets too close to the edge.

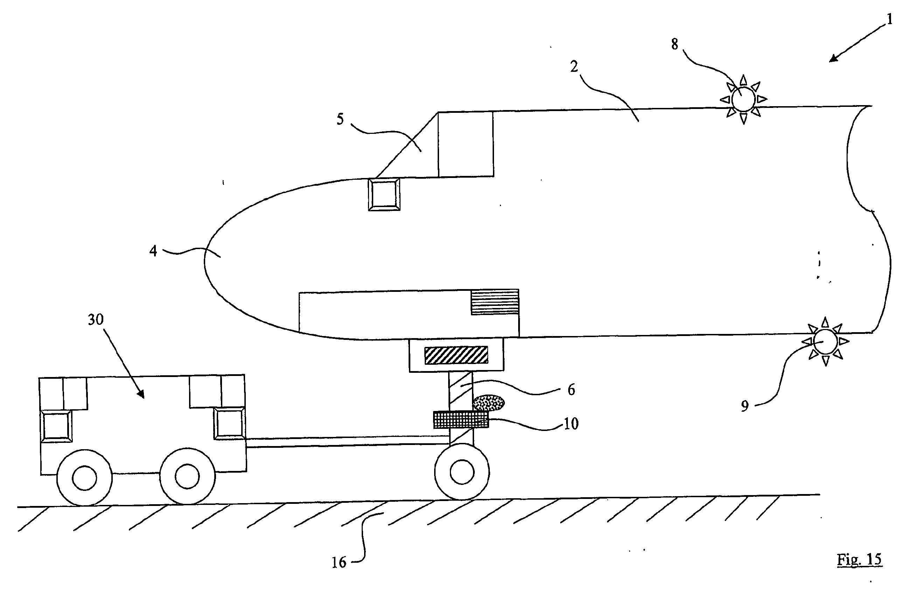

Fig. 15 illustrates another embodiment of the invention, in which there is illustrated an aircraft 1, all parts identified by the same reference numerals as heretofore, being attached to a tow truck 30. Ideally, the tow truck 30 would also mount a display and warning device, similar to the display and warning device mounted in the aircraft, thus providing the same alert to a tow truck.

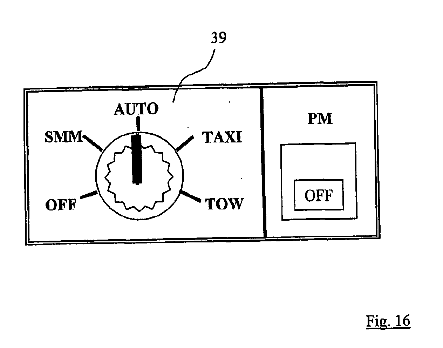

What must be appreciated about the present invention is, depending on the particular operation that the airplane is engaged in, such as, for example, manoeuvring onto a runway, taxi mode, stand manoeuvring and so on, there will be different alert zones and alert signals required. Thus, the processing will include determining which particular operation is being carried out and then the pilot or other person will be able to change the system between the various modes. One can envisage, for example, there being a towing mode, a stand manoeuvring mode, a taxiing mode and then an automatic mode where a warning may be provided concerning any other collision. The pilot or person driving or towing the aircraft, as the case may be, may be provided with visual alerts such as, for example, illustrated in Fig. 5. The pilot may also be provided with means to determine the type of alert by way of a control panel, such as illustrated in Fig. 16 where there is illustrated a control panel 39. The control panel 39 has a number of different modes of control shown which may be provided, such as, for example, as explained already, turning the whole device off, operating under stand manoeuvring mode "SMM", an automatic mode "auto", a taxi mode "taxi", a tow mode "tow" and then finally with a pavement mode "PM" that could be inhibited one way or the other, depending on where the aircraft is travelling.

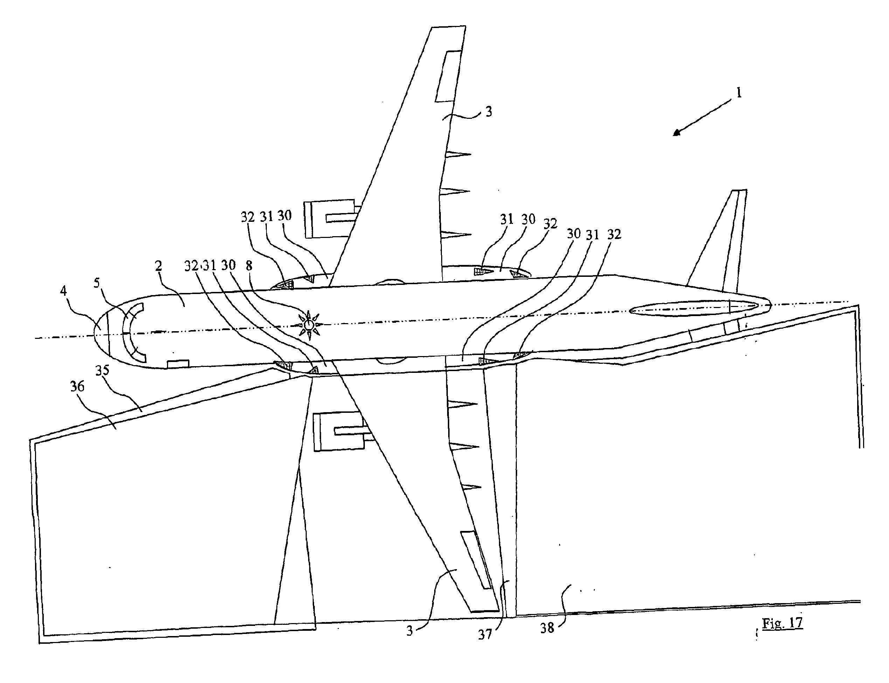

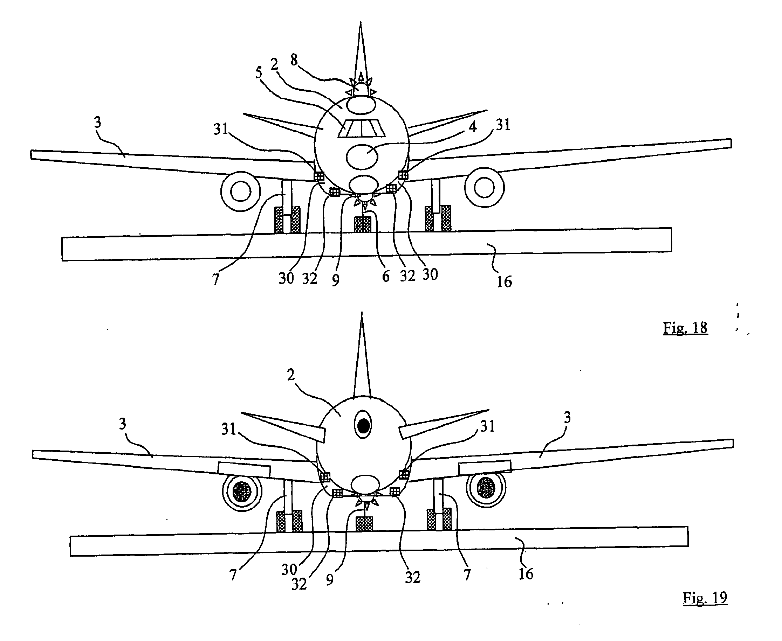

Referring to Figs. 17 to 19, there is illustrated the mounting of sensors onto wing body fairings of an aircraft. Again, the aircraft is identified by the reference numeral 1 and sensors 31, 32 are illustrated mounted on fairings 30. All the remainder of the components are identified by the same reference numerals. It will be seen from Fig. 17 how the sensors can provide overlapping scan fields 35 and 36, 37 and 38.

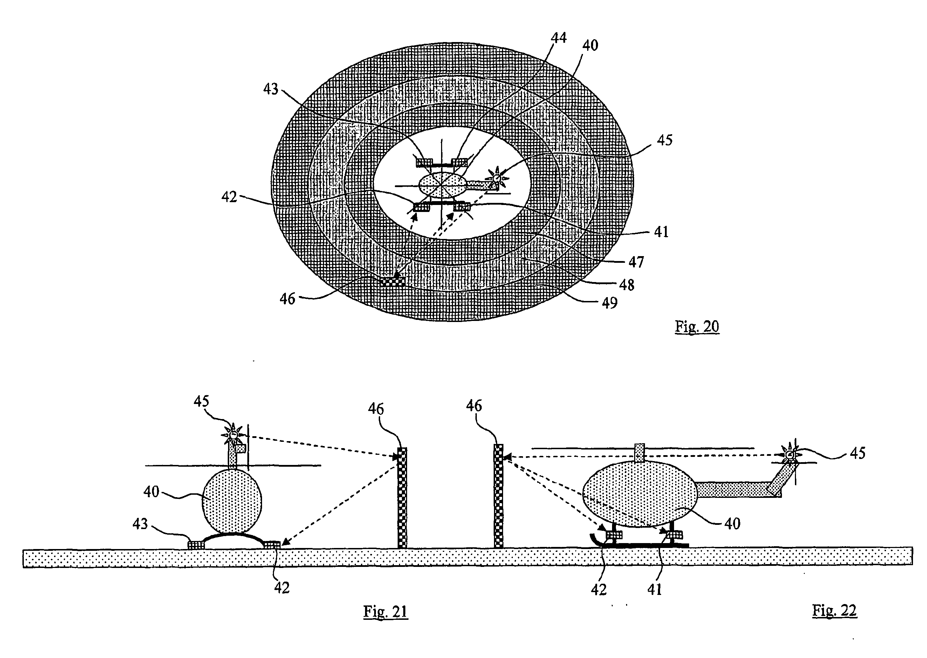

Referring now to Figs. 20, 21 and 22, there is illustrated a helicopter 40 having four sensors 41, 42, 43 and 44 fitted thereto. There is also illustrated the helicopter and collision warning light 45 and an object 46. Fig. 20 shows the various warning zones, namely, a major warning zone 47, a caution zone 48 and a protection zone 49. Obviously, for a helicopter, there will be somewhat simpler protection zones than for a fixed wing aircraft. Also, it will be understood that depending on whether the helicopter has wheels or skids, the term "ground manoeuvring" or "being on the ground" includes hovering close to the ground.

Sensors may be fitted to various parts of a helicopter body as, for example, on an aircraft fuselage, as mentioned above. This would be particularly the case if a helicopter is not fitted with skids or has retractable landing gear. However, this will be readily apparent to those skilled in the art.

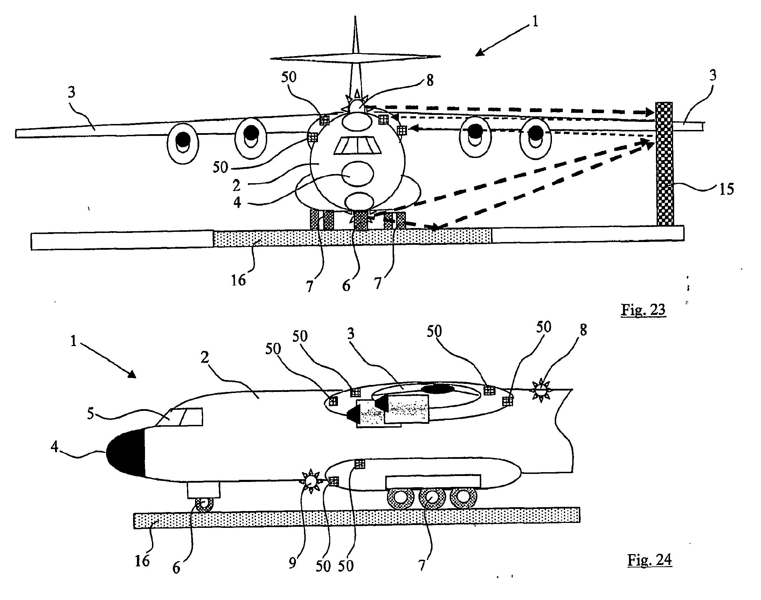

Referring now to Figs. 23, 24 and 25, there is illustrated an alternative type of aircraft, again indicated generally by the reference numeral 1, in which sensors, now identified by the reference numeral 50, are placed in different portions of wing body fairings flush with the skin. All other portions of the aircraft 1 are identified by the same reference numerals as Figs. 1 to 3. These are located before and after the wing leading edge and trailing edge to avoid contamination from de-icing fluids.

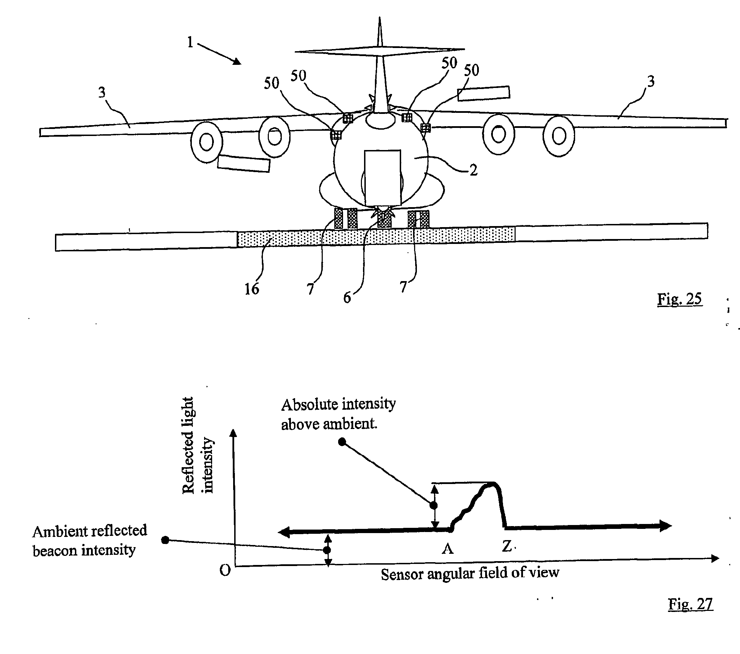

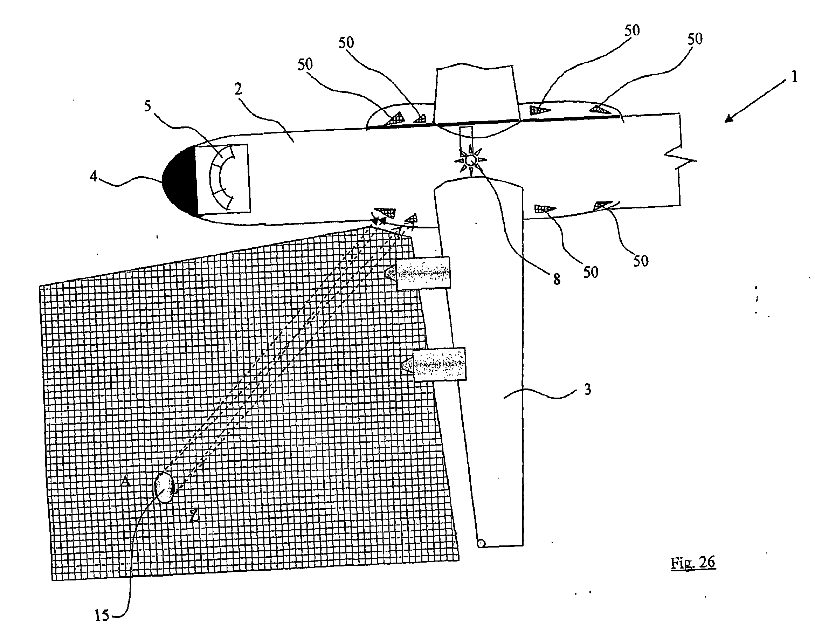

Fig. 26 illustrates the location of an object 15, while Fig. 27 illustrates a signal that would be received. It will be seen how there is an increase in intensity of the signal on encountering the object.

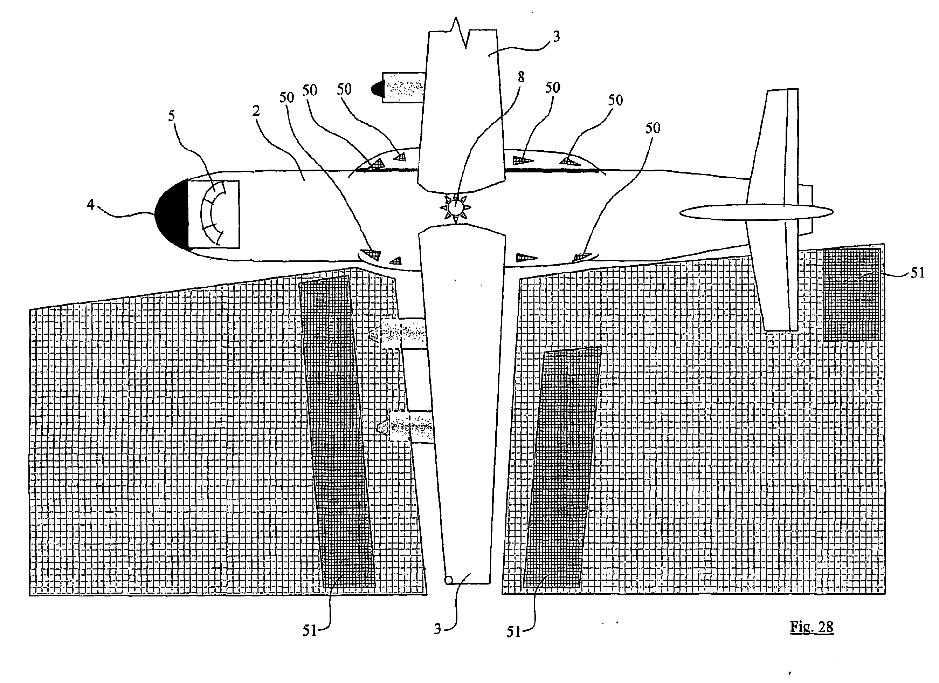

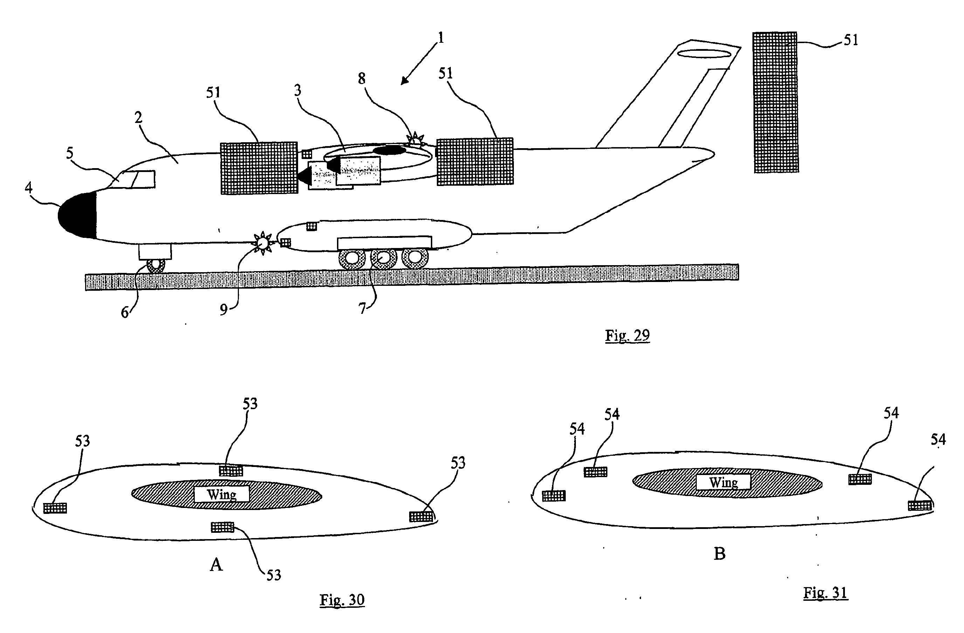

Figs. 28 and 29 illustrate in plan and in elevation various stand manoeuvring zones for this aircraft, identified by the reference numeral 51.

Figs. 30 and 31 show different locations in body fairings for sensors, identified by the reference numeral 53 in Fig. 30 and 54 in Fig. 31.

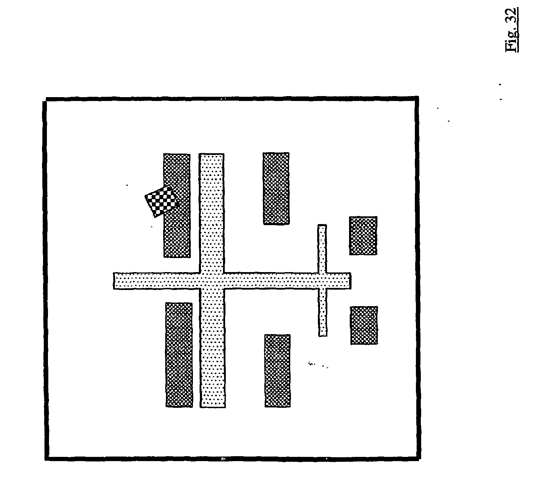

Fig. 32 illustrates a cockpit display for stand manoeuvring alert warning zones, as illustrated in Figs. 28 and 29. This display could be used in the cockpit.

It is envisaged that the processing means will be used to actively determine the warning alert zones and the situations that will cause a warning to be given to a pilot. It is envisaged that various "learning" processes will be used such as, for example, the warning means will be provided with means, with the aircraft stationary, to carry out what is effectively a scan of the surrounding area to determine the dimensions and location relative to the aircraft of all the objects adjacent the aircraft. These will be the objects that will be likely to cause a collision on the aircraft moving towards them. Then the processing means will be able to map and store and update as necessary the location of the objects. Thus, with an aircraft stationary for example on a stand, or in a hanger, it will be possible to map accurately the physical dimensions of the hanger or stand and to store them. Then it will be possible to determine, having regard to the objects and the likely future movement of the aircraft, the proximity to the object required to produce a subsequent collision alert. Thus, for example, in a hanger, one would expect, once the wing tips were, for example, two or three meters away from the wall of the hanger, that this would be sufficient, while in other situations, that close a proximity to another object could be a cause of major concern.

The manner in which the pilot or person manoeuvres the aircraft on the ground, whether it be from the cockpit of the aircraft or from a tow truck, can be determined in whatever way is deemed appropriate. The potential threat objects will generally first be deterred in the protection zone. The dimensions of this zone will allow a minimum of two anti-collision flashes to be used to determine the relative track and elevation of adjacent objects. Then the object may pass from the protection zone into what is effectively the caution zone, which will cause a caution alert to be generated and then finally, the object may enter the warning zone, such as, for example, has been shown above.

As mentioned above, there will generally be four modes, stand manoeuvring mode, taxi mode, pavement department mode and for aircraft maintenance or aircraft positioning purposes, a towing mode.

It will be appreciated that the towing modes are used on aircraft maintenance ramp areas in proximity to maintenance hangers. Essentially, this is a variation of the stand manoeuvring mode because again, basically the object is to protect the perimeter of the aircraft. Obviously, the alerts are narrowed down to protect the aircraft from objects in close proximity. For example, aircraft manoeuvring out of hangers or within the hanger where the wing tips are in close proximity to the hanger wall, to the exit or other aircraft, of necessity, requires that the warnings only be given, as mentioned above, when there is very close proximity between, for example, the wing tip and some other part of the hanger. It will be appreciated that in these situations, the aircraft are travelling slowly so it is easy to stop the aircraft.

It will also be appreciated that the present invention relates to two different types of aircraft, namely, fixed wing and rotary wing aircraft. Included in fixed wing aircraft, in accordance with the present invention, is fixed wing aircraft with rotating wing and props which operate in the vertical take-off mode. Again, the present invention can be used with such aircraft. It will also be appreciated that sensors can be placed anywhere that is convenient.

Ideally, the sensors are mounted in a position so as to avoid contamination by de-icing fluid. Very often, wings are sprayed with de-icing fluid and thus there are advantages in placing sensors on the fairings because de-icing fluid is not normally sprayed on the fairings and thus the sensors will not be contaminated. It is important to avoid contamination of the sensors with de-icing fluid which is thick and would interfere with the smooth operation of the system.

While, with the present invention in the description above, there is the use of anti-collision lights as the light source, the term "anti-collision" light is to be used in the sense that any other type of lights, other than the conventional infrared light source that is used at present if they are fitted permanently to an aircraft, may similarly be used.

It is a major feature of the invention that these modes of operation change the zones in which collision warning will be given. For example, in a stand manoeuvring mode, the aircraft is normally surrounded by objects in close proximity and therefore, in general, a picture of the aircraft and specific warning zones may optionally be displayed in the cockpit. In spite of the relatively slow speed of push-backs, any alert at this stage could require the aircraft to be stopped suddenly, that is to say, using the maximum deceleration, for example, of a push truck consistent with avoidance of injury to cabin crew who may be moving about the aisles of the aeroplane. This alert can be verbally communicated either to the pushback crew or, as mentioned above, by a data transfer link to a repeater display in the push truck cab. Various types of warnings may be used such as flashing lights and audible warnings.

Generally speaking, prior to taxi, the system would be, for example, switched to taxi mode and then, in this mode, the system will continuously monitor all adjacent objects and will generate a caution alert if required.

It will be appreciated that to avoid alerts during take-off, the device will be subject to the normal take-off inhibit procedures.

It will be appreciated that various computing and data processing devices may be provided.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the appended claims.

## Claims

1. An aircraft on the ground collision avoidance warning system for an aircraft having at least one anti-collision light source emitting a pulsed light, the system comprising:
a light source for delivering light onto an external object and sensors for measuring the intensity of the back scattered light from the object, **characterised in that** the light source comprises the or one of the aircraft anti-collision light sources (8, 9); and further **characterised in that** the sensors consist of
at least a pair of sensors (10, 11, 12) which are mounted on the aircraft (1) spaced-apart from the light source (8, 9) and forward of a beam transmitted from the light source (8, 9) to record the intensity, azimuth and elevation of the back scattered light; and
processing means to determine therefrom the dimensions and location relative to the aircraft (1) of an object (15) impinged on by the light source and to determine, having regard to the position and movement of the aircraft (1), whether a collision alert is to be given.

2. A system as claimed in claim 1, in which the processing means measures the speed at which the aircraft (1) and object (15) are approaching each other.

3. A system as claimed in claim 1 or 2, in which the sensors (10, 11, 12) are placed on one or more of: the aircraft fairings (30); the nose cone (4); and the landing gear (6, 7); and skids for a helicopter (40) or other locations.

4. A system as claimed in any preceding claim, in which each sensor (10, 11, 12) has a preset zone within which backscattered light is received and the sensors are so arranged that at least two zones (35, 36, 37, 38) overlap.

5. A system as claimed in any preceding claim, in which the processing means communicates by a wireless communications system.

6. A system as claimed in any preceding claim, in which the processing means comprises means to store and update relevant details of a predetermined space relative to a portion of the aircraft to define a protection zone for that portion of the aircraft (1).

7. A system as claimed in claim 6, in which the protection zones (20, 21, 22) are divided into different sectors for which different collision warnings are given.

8. A system as claimed in claim 6 or 7, in which the protection zones (20, 21, 22) are determined having regard to one or more specified operations of the aircraft including:
location of the aircraft (1);
movement of the aircraft (1);
speed of movement of the aircraft (1);
possibility of the presence of other moving aircraft (1(a), 1(b));
probable maximum speed of other moving aircraft (1(a), 1(b));
possibility of the presence of other moving vehicles; and
probable maximum speed of other moving vehicles.

9. A system as claimed in claim 8, in which some of the specified operations comprise:
stand manoeuvring;
aircraft pushback;
taxi mode;
movement in the presence of other aircraft;
tow mode;
pavement departure;
movement in the presence of snow;
runway entry; and
runway departure.

10. A system as claimed in any preceding claim, in which the processing means comprises means, with the aircraft stationary, to carry out the steps of:
determining the dimensions and location relative to the aircraft of all objects likely to cause a collision on the aircraft moving towards them;
mapping and storing the location of the objects; and
determining, having regard to the objects and the likely future movement of the aircraft, the proximity to the object required to provide a subsequent collision alert.

## Patentansprüche

1. Warnsystems zur Kollisionsvermeidung eines Flugszeugs am Boden für ein Flugzeug, das mindestens eine Lichtimpulse emittierende Kollisionsschutzlichtquelle aufweist, wobei das System Folgendes umfasst:
eine Lichtquelle zum Ausgeben von Licht auf einen externen Gegenstand und Sensoren zum Messen der Intensität des von dem Gegenstand zurückgestrahlten Lichts, **dadurch gekennzeichnet, dass** die Lichtquelle die oder eine der Antikollisionslichtquellen (8, 9) des Flugzeugs aufweist, und weiter **dadurch gekennzeichnet, dass** die Sensoren aus
mindestens einem Paar von Sensoren (10, 11, 12) bestehen, die an dem Flugzeug (1) von der Lichtquelle (8, 9) entfernt und vor einem von der Lichtquelle (8, 9) ausgesendeten Strahl angeordnet sind, um die Intensität, den Richtungswinkel und die Richthöhe des zurückgestreuten Lichts aufzuzeichnen; und
Verarbeitungsmittel zum Bestimmen aufgrund dessen der Abmessungen und des Standorts eines Gegenstands (15) in Bezug zu dem Flugzeug (1), auf den das Licht aus der Lichtquelle auftrifft, und zum Bestimmen, unter Berücksichtigung der Position und Bewegung des Flugzeugs (1), ob eine Kollisionswarnung zu geben ist.

2. System nach Anspruch 1, bei dem das Verarbeitungsmittel die Geschwindigkeit misst, bei der sich das Flugzeug (1) und der Gegenstand (15) einander annähern.

3. System nach Anspruch 1 oder 2, bei dem die Sensoren (10, 11, 12) auf einem oder mehreren der folgenden Elemente platziert sind: die Flugzeugverkleidung (30); dem Bugkonus (4); und dem Fahrwerk (6, 7); sowie Kufen für einen Hubschrauber (40) oder andere Positionen.

4. System nach einem vorhergehenden Anspruch, bei dem jeder Sensor (10, 11, 12) eine voreingestellte Zone aufweist, in der zurückgestrahltes Licht empfangen wird, und die Sensoren so angeordnet sind, dass sich mindestens zwei Zonen (35, 36, 37, 38) überlappen.

5. System nach einem vorhergehenden Anspruch, bei dem das Verarbeitungsmittel durch ein Funkkommunikationssystem kommuniziert.

6. System nach einem vorhergehenden Anspruch, bei dem das Verarbeitungsmittel Mittel zum Speichern und Aktualisieren relevanter Details eines vorbestimmten Raums in Bezug zu einem Teil des Flugzeugs aufweist, um eine Schutzzone für diesen Teil des Flugzeugs (1) zu definieren.

7. System nach Anspruch 6, bei dem die Schutzzonen (20, 21, 22) in verschiedene Sektoren unterteilt sind, für die unterschiedliche Kollisionswarnungen gegeben werden.

8. System nach Anspruch 6 oder 7, bei dem die Schutzzonen (20, 21, 22) in Bezug zu einer oder mehreren bestimmten Operationen des Flugzeugs bestimmt werden, die Folgende einschließen:
Position des Flugzeugs (1);
Bewegung des Flugzeugs (1);
Bewegungsgeschwindigkeit des Flugzeugs (1);
Möglichkeit der Anwesenheit eines anderen, sich bewegenden Flugzeugs (1(a), 1 (b));
wahrscheinliche Höchstgeschwindigkeit eines anderen, sich bewegenden Flugzeugs (1(a), 1(b));
Möglichkeit der Anwesenheit anderer, fahrender Fahrzeuge; und
wahrscheinliche Höchstgeschwindigkeit anderer, fahrender Fahrzeuge.

9. System nach Anspruch 8, bei dem einige der spezifizierten Operationen aufweisen:
Manövrieren im Stand;
Zurücksetzen eines Flugzeugs;
Rollbetriebsart;
Bewegung in Anwesenheit eines anderen Flugzeugs;
Schleppbetriebsart;
Verlassen der Fahrbahn;
Bewegung bei Vorliegen von Schnee;
Aufsetzen auf Landebahn; und
Abflug von Startbahn.

10. System nach einem vorhergehenden Anspruch, bei dem das Verarbeitungsmittel Mittel aufweist, während das Flugzeug steht, um die folgenden Schritte auszuführen:
Bestimmen der Abmessungen und Position aller Gegenstände in Bezug zum Flugzeug, die wahrscheinlich eine Kollision an dem sich auf sie zu bewegenden Flugzeug bewirken können;
Aufzeichnen und Speichern der Position der Gegenstände; und
Bestimmen, in Bezug zu den Gegenständen und der wahrscheinlichen zukünftigen Bewegung des Flugzeugs, der Nähe des Gegenstands, die zum Geben einer anschließenden Kollisionswarnung erforderlich ist.

## Revendications

1. Système avertisseur d'anticollision d'aéronef au sol pour un aéronef ayant au moins une source lumineuse d'anticollision émettant une lumière pulsée, le système comportant :
une source lumineuse destinée à acheminer de la lumière sur un objet extérieur et des capteurs destinés à mesurer l'intensité de la lumière diffuse en provenance de l'objet, **caractérisé en ce que** la source lumineuse comporte des sources lumineuses d'anticollision d'aéronef (8, 9) ou l'une de celles-ci ;
et **caractérisé par** ailleurs en ce que les capteurs sont constitués d'au moins une paire de capteurs (10, 11, 12) qui sont montés sur l'aéronef (1) de manière espacée par rapport à la source lumineuse (8, 9) et à l'avant d'un faisceau transmis en provenance de la source lumineuse (8, 9) pour enregistrer l'intensité, l'azimut et le site de la lumière diffuse ; et
un moyen de traitement destiné à déterminer à partir de ceux-ci les dimensions et le positionnement par rapport à l'aéronef (1) d'un objet (15) heurté par la source lumineuse et destiné à déterminer, en fonction de la position et du mouvement de l'aéronef (1), si une alerte de collision doit être donnée.

2. Système selon la revendication 1, dans lequel le moyen de traitement mesure la vitesse à laquelle l'aéronef (1) et l'objet se rapprochent l'un de l'autre.

3. Système selon la revendication 1 ou la revendication 2, dans lequel les capteurs (10, 11, 12) sont placés sur un ou plusieurs parmi : les carénages (3) ; la pointe avant (4) ; et le train d'atterrissage (6, 7) de l'aéronef ; et les patins pour un hélicoptère (40) ou sur d'autres positionnements.

4. Système selon l'une quelconque des revendications précédentes, dans lequel chaque capteur (10, 11, 12) a une zone préréglée dans laquelle la lumière diffuse est reçue et les capteurs sont arrangés d'une telle manière qu'au moins deux zones (35, 36, 37, 38) se chevauchent.

5. Système selon l'une quelconque des revendications précédentes, dans lequel le moyen de traitement communique par le biais d'un système de communications sans fil.

6. Système selon l'une quelconque des revendications précédentes, dans lequel le moyen de traitement comporte des moyens pour enregistrer et mettre à jour des détails pertinents d'un espace prédéterminé par rapport à une partie de l'aéronef afin de définir une zone de protection pour cette partie de l'aéronef (1).

7. Système selon la revendication 6, dans lequel les zones de protection (20, 21, 22) sont divisées en différents secteurs pour lesquels différents avertissements de collision sont donnés.

8. Système selon la revendication 6 ou la revendication 7, dans lequel les zones de protection (20, 21, 22) sont déterminées en fonction d'une ou de plusieurs opérations spécifiées de l'aéronef, y compris :
positionnement de l'aéronef (1) ;
mouvement de l'aéronef (1) ;
vitesse de mouvement de l'aéronef (1) ;
possibilité de présence d'un autre aéronef en mouvement (1(a), 1(b)) ;
vitesse maximale probable d'un autre aéronef en mouvement (1(a), 1(b)) ;
possibilité de présence d'autres véhicules en mouvement ; et
vitesse maximale probable d'autres véhicules en mouvement.

9. Système selon la revendication 8, dans lequel certaines des opérations spécifiées comportent:
guidage pour l'accostage ;
refoulement d' aéronef ;
mode de circulation au sol ;
mouvement en présence d'un autre aéronef ;
mode de remorquage ;
sortie de taxiway ;
mouvement en présence de neige ;
pénétration de piste ; et
sortie de piste.

10. Système selon l'une quelconque des revendications précédentes, dans lequel le moyen de traitement comporte un moyen, alors que l'aéronef est à l'arrêt, pour effectuer les étapes consistant à :
déterminer les dimensions et le positionnement par rapport à l'aéronef de tous les objets susceptibles de donner lieu à une collision sur l'aéronef se déplaçant vers ceux-ci ;
faire concorder et enregistrer le positionnement des objets ; et
déterminer, en fonction des objets et du risque de mouvement futur de l'aéronef, la proximité de l'objet nécessaire pour la mise en oeuvre d'une alerte de collision subséquente.
